# EUROPÄISCHE PATENTSCHRIFT

(11) **EP 2 611 857 B1**
(45) Veröffentlichungstag und Bekanntmachung des Hinweises auf die Patenterteilung: **01.10.2014**
(21) Anmeldenummer: 11730622.5
(22) Anmeldetag: 29.06.2011
(51) Int. Cl.: C08F 220/42, C08F 220/46, C08J 9/14, B32B 5/18, C08J 9/04

(54) **PMI-SCHÄUME MIT VERBESSERTEN MECHANISCHEN EIGENSCHAFTEN, INSBESONDERE MIT ERHÖHTER REISSDEHNUNG**
PMI FOAMS WITH BETTER MECHANICAL PROPERTIES IN PARTICULAR WITH HIGHER ELONGATION AT BREAK
MOUSSES DE PMI PRÉSENTANT DE MEILLEURES PROPRIÉTÉS MÉCANIQUES EN PARTICULIER UNE MEILLEURE ÉLONGATION À LA RUPTURE

(30) Priorität: 31.08.2010 DE 102010040010; 06.09.2010 DE 102010040286
(43) Veröffentlichungstag der Anmeldung: 10.07.2013
(73) Patentinhaber: Evonik Röhm GmbH, 64293 Darmstadt (DE)
(72) Erfinder: BERNHARD, Kay, 64291 Darmstadt (DE); HEMPLER, Mathias, 63579 Freigericht (DE); GEYER, Werner, 64395 Brensbach (DE); BARTHEL, Thomas, 64646 Heppenheim (DE); JAHN, Torsten, 64807 Dieburg (DE)
(86) Internationale Anmeldenummer: PCT/EP2011/060888
(87) Internationale Veröffentlichungsnummer: WO 2012/028353

(56) Entgegenhaltungen:
- EP-A1- 0 356 714
- EP-A2- 0 874 019
- WO-A1-03/020804
- WO-A1-2008/113815
- WO-A1-2009/050662
- WO-A2-03/078514
- DE-A1-102007 033 120
- US-A- 4 774 118
- US-A1- 2007 077 442
- DATABASE WPI Week 201037 Thomson Scientific, London, GB; AN 2010-F96068 XP000002656682, & CN 101 709 574 A (UNIV NANJING TECHNOLOGY) 19. Mai 2010 (2010-05-19)

## Beschreibung

### Gebiet der Erfindung

Die Erfindung betrifft Zusammensetzungen zur Herstellung von Polymethacrylimid-Schaumstoffen (PMI-Schäumen) mit besonders guten mechnischen Eigenschaften, insbesondere mit besonders vorteilhafter Reißdehnung. Die Erfindung betrifft darüber hinaus Verfahren zu deren Herstellung, Verarbeitung und Anwendung dieser Schaumstoffe. Insbesondere betrifft die Erfindung neue Materialien deren Neigung zur Rissbildung deutlich gegenüber dem Stand der Technik reduziert ist. Dies ist gleichbedeutend mit einer gegenüber dem Stand der Technik höheren Reißdehnung.

### Stand der Technik

PMI-Schäume, z.B. ROHACELL^{®} der Firma Evonik Röhm, werden als Strukturschaum in Compositen eingesetzt und hierfür zusammen mit Deckschichten bestehend aus Fasern, meist Kohle- bzw- Glasfasern, und Harzen verarbeitet. Der Bau der Composite erfolgt häufig bei Temperaturen von 180°C, während das Bauteil auch bei Temperaturen von -55°C eingesetzt werden soll. Durch den unterschiedlichen thermischen Ausdehnungskoeffizienten (CTE) der Deckschicht und der PMI-Schäume, entstehen beim Abkühlen Risse im Kern, was ein Ausschlusskriterium für den Einsatz von PMI-Schäumen in solchen Bauteilen darstellt. Entsprechende Tests der Luftfahrtindustrie werden üblicherweise nicht bestanden. Damit besteht in der verarbeitenden Industrie wie der Luft- und Raumfahrtindustrie, aber auch bei Herstellern von Straßen- oder Schienenfahrzeugen ein großes Interesse an Schaummaterialien mit verbesserter Reißdehnung.

PMI-Schäume sind bereits seit langer Zeit bekannt. Unter dem Handelsnahmen ROHACELL^{®} finden diese Schaumstoffe insbesondere im Bereich der Schichtwerkstoffe viele Anwendungen (Laminate, Composits, Schaumstoffverbundkörper, Sandwichkonstruktionen, Sandwiches). Schichtwerkstoffe sind Formkörper, die aus einer außen liegenden Deckschicht und einem innen liegenden Kernwerkstoff aufgebaut sind. Als Deckschichten verwendet man Materialien, die uni- oder multiaxial äußerst hohe Zugkräfte aufnehmen können. Beispiele sind Glas- und Kohlefasergewebe oder auch Aluminiumplatten, die mit Klebeharzen auf dem Kernwerkstoff fixiert werden. Als Kernwerkstoffe werden bevorzugt Materialien mit geringen Raumgewichten, typischerweise im Bereich von 30 kg/m³ und 200 kg/m³ eingesetzt.

Solche isotropen Schäume sind in der Lage, Schubkräfte in allen Raumrichtungen aufzunehmen. Vorteilhaft ist die leichte Bearbeitbarkeit, die mit den bei Holz üblichen Werkzeugen und Maschinen erfolgen kann. Darüber hinaus können bestimmte Hartschäume, wie zum Beispiel ROHACELL^{®}, thermisch umgeformt werden. Ein erheblicher Vorteil von geschlossenporigen Hartschäumen ist, dass kein Harz eindringen kann, was das Gesamtgewicht erhöhen würde.

In DE2726260 wird die Herstellung von PMI-Schäumen beschrieben, die ausgezeichnete mechanische Eigenschaften auch bei hohen Temperaturen aufweisen. Die Herstellung der Schäume erfolgt im Gussverfahren, d.h. Monomere und erforderliche Zusatzstoffe werden gemischt und in einer Kammer polymerisiert. Das Polymerisat wird in einem zweiten Schritt durch Erwärmen geschäumt. Eine besonders hohe Reißdehnung zeigen diese Standartmaterialien jedoch nicht.

Mechanisch stabile PMI-Schäume, die mit Allylmethacrylat vernetzt sind, finden sich in EP 356 714. Auch diese sehr festen Schäume zeigen eine nur sehr geringe Reißdehnung. Gleiches gilt für die in JP 2006 045532 offenbarten, mit Metallsalzen ionisch vernetzten PMI-Schäume.

Ein besonderes Gebiet der Entwicklung der letzten Jahre stellen feinporige Schäume auf Basis von PMI dar. Diese werden beispielsweise in EP 532023 beschrieben. Das dort beschriebene Verfahren weist aber verschiedene, gravierende Nachteile auf. Die resultierenden, Vernetzer freien Schäume haben nur eine niedrige Wärmeformbeständigkeit und ein schlechtes Kriechverhalten.

Feinporige Schaumstoffe mit Vernetzer sind ebenfalls bekannt und finden sich in EP 1 678 244. Diese Feinporigen Materialien können Reißdehnung von bis zu 5,5% aufweisen. Es ist möglich, eine Feinporigkeit durch eine Variation von Treibmitteln oder durch den Zusatz von unlöslichen Nukleierungsmitteln zu erreichen. Feinporigere Materialien können durch die Verwendung von unlöslichen Nukleierungsmitteln hergestellt werden, letztere erfordern jedoch die Verwendung von Antiabsetzmitteln, was einen erhöhten Aufwand in der Produktion mit sich bringt. Insgesamt sind jedoch keine kleinporigen Schäume mit Reißfestigkeiten größer 5,5% beschrieben.

Die einzige bekannte Lösung des Problems einer zu geringen Reißdehnung wurde durch das Produkt ROHACELL^{®} FX gelöst. Der weichmachende Effekt wurde in diesem Produkt durch eine mittels Additivierung bedingte erhöhte Wasseraufnahme bewirkt. Jedoch zeigen PMI-Schäume mit hohem Wassergehalt auf der anderen Seite deutlich verschlechterte mechanische, bzw. thermomechanische Eigenschaften.

In CN 100420702 sind PMI-Schäume auf Acrylnitrilbasis beschrieben. Diese zeigen zwar einerseits gute Reißfestigkeitswerte, bei jedoch gleichzeitig gegenüber Standartmaterialien leicht verringerten thermomechanischen Eigenschaften.

### Aufgabe

Aufgabe der vorliegenden Erfindung war es daher, Formulierungen zur Herstellung von PMI-Schaumstoffen mit besonders hoher Reißfestigkeit zu finden. Die Schaumstoffe sollen darüber hinaus gleich gute oder sogar verbesserte thermomechanische Eigenschaften wie die bekannten PMI-Schäume aufweisen.

Aufgabe war es insbesondere, PMI-Schäume mit Reißdehnungen größer 6,0%, ganz besonders größer 9,0% zur Verfügung zu stellen.

Darüber hinaus war es Aufgabe der vorliegenden Erfindung, PMI-Schäume mit verminderter Rissbildung zur Verfügung zu stellen. Diese verminderte Rissbildung soll vor allem in einem Temperaturbereich zwischen -60 °C und 200 °C gewährleistet sein.

### Lösung

Gelöst werden die Aufgaben durch ein neuartiges Verfahren zur Herstellung von schäumbaren vernetzten Polymerisaten, insbesondere von PMI-Schäumen, bei dem das Polymerisat (Meth)acrylsäure, (Meth)acrylnitril und einen (Meth)acrylsäurediester eines Diols, welches ein Molekulargewicht von mindestens 250 g/mol aufweist, enthält.

Insbesondere setzt sich das Gemisch zur Herstellung des Polymerisats im erfindungsgemäßen Verfahren mindestens aus 30 bis 70 Gew% (Meth)acrylsäure, 30 bis 60 Gew% (Meth)acrylnitril, 0,01 bis 15 Gew% (Meth)acrylsäurediester eines Diols, welches ein Molekulargewicht von mindestens 250 g/mol aufweist, 0,01 bis 15 Gew% Treibmittel und 0,01 bis 2,0 Gew% Polymerisationsinitiatoren zusammen.

Die Formulierung (Meth)acrylsäure steht für Methacrylsäure, Acrylsäure oder Mischungen aus beiden. Die Formulierung (Meth)acrylnitril steht für Methacrylnitril, Acrylnitril oder Mischungen aus beiden. Entsprechendes gilt für eine Formulierung wie Alkyl(meth)acrylat. Diese steht für die Alkylester der Methacrylsäure, der Acrylsäure oder von Mischungen aus beiden.

Bei dem Diol, aus dem der (Meth)acrylsäurediester gebildet ist, handelt es sich um ein Polyetherdiol, ein Polyesterdiol, ein OH-funktionelles Olig(meth)acryltelechel oder ein Polyolefindiol, bevorzugt um ein Polyetherdiol. Die (Meth)acrylsäurediester können aus den Diolen über bekannte Verfahren wie Umesterung mit (Meth)acrylsäureestern oder Veresterung mit (Meth)acrylsäure oder (Meth)acrylsäurehalogeniden hergestellt werden.

Die Diole haben ein minimales Molekulargewicht von 250 g/mol, bevorzugt von 400 g/mol. Das maximale Molekulargewicht der Diole beträgt 5000 g/mol, bevorzugt 2000 g/mol und besonders bevorzugt 1500 g/mol.

Bei den Polyetherdiolen kann es sich um Polyethylenoxid, Polypropylenoxid, Polymethylenoxid oder Polytetrahydrofuran handeln.

Bei den Polyesterdiolen handelt es sich bevorzugt um kurzkettige amorphe Polyesterdiole, hergestellt aus Disäuren und Diolen, um Polyesterdiole, die über eine ringöffnende Polymerisation herstellbar sind, wie Polylactid oder Polyglkcolid oder um Polymilchsäure.

Oligo(meth)acrylattelechele sind z.B. über eine kontrollierte radikalische Polymerisation wie die atom transfer radical polymerisation (ATRP) verfügbar.

Bei den erfindungsgemäß verwendbaren Polyolefinen handelt es sich um nichtkristalline, kurzkettige Polyolefine wie beispielsweise ataktisches Polypropylen, Polybutadien, hydriertes Polybutadien, EPDM, EPM oder APAOS (amorphes Poly-alpha-Polyolefine).

Eine zunächst geringe Vernetzung stabilisiert den PMI-Schaum während des Schäumvorgangs und ermöglicht so die Herstellung von homogenen Schäumen. Gleichzeitig werden die Wärmeformbeständigkeit und das Kriechverhalten des Schaums durch Vernetzer verbessert. Überraschend wurde gefunden, dass die ausschließliche oder anteilige Verwendung von langkettigen Vernetzern zu PMI-Schäumen mit einer besonders guten Reißdehnung führen. Das Kriechverhalten (Kriechen) wird erfindungsgemäß im Einklang mit DIN 53425, ASTM D621 und D2990 bei 180°C, einer Messzeit von zwei Stunden und einem von der Dichte des Material abhängigen geeigneten Druck gemessen.

Gegenüber den Verfahren aus dem Stand der Technik bietet das erfindungsgemäße Verfahren weitere Vorteile:
- Man erhält feinporige PMI-Schäume, deren Dichte im gewünschten Bereich zwischen 30 und 300 kg/m³ liegt.
- Die erwünschte hohe Reißdehnung ist in einem breiten Temperaturbereich, zwischen -60 °C und 200 °C gewährleistet.
- Zur Polymerisation werden homogene, dünnflüssige Gemische eingesetzt, die in technisch einfacher Weise hergestellt und weiterverarbeitet werden können.
- Die sonstigen mechanischen Eigenschaften neben der Reißdehnung, die Wärmeformbeständigkeit und das Kriechverhalten sind deutlich besser als bei kommerziell erhältlichen Produkten.

Als Treibmittel können folgende Verbindungen oder Gemische daraus verwendet werden: Formamid, Ameisensäure, Harnstoff, Itakonsäure, Zitronensäure, Dicyandiamid, Wasser, Monoalkylharnstoffe, Dimethylharnstoff, 5,5'-Azo-bis-5-ethyl-1,3-dioxan, 2,2`-Azo-bis-isobuttersäurebutylamid, 2,2`-Azo-bis-isobuttersäure-N-diethylamid, 2,2',4,4,4',4'-Hexamethyl-2,2'-azopentan, 2,2`-Azo-bis-2-methyl-propan, Dimethylcarbonat, Di-tert-butycarbonat, Acetoncyanhydrincarbonat, Oxi-isobuttersäuremethylestercarbonat, N-Methylurethan, N-Ethylurethan, N-tert-butylurethan, Urethan, Oxalsäure, Maleinsäure, Oxiisobuttersäure, Malonsäure, Cyanformamid, Dimethylmaleinsäure, Methantetracarbonsäuretetraethylester, Oxamidsäure-n-butylester, Methantricarbonsäuretrimethylester, Methantricarbonsäuretriethylester, sowie einwertige Alkohole aus 3-8 Kohlenstoffatomen wie z.B. Propanol-1, Propanol-2, Butanol-1, Butanol-2, tert-Butanol und isoButanol.

Als Initiatoren werden Verbindungen und Initiatorsysteme verwendet, die radikalische Polymerisationen in Gang setzen können. Bekannte Verbindungsklassen sind Peroxide, Hydroperoxide, Peroxodisulfate, Percarbonate, Perketale, Peroxiester, Wasserstoffperoxid und Azoverbindungen. Beispiele für Initiatoren sind Wasserstoffperoxid, Dibenzoylperoxid, Dicyclohexylperoxodicarbonat, Dilaurylperoxid, Methylethylketonperoxid, Acetylacetonperoxid, Di-tert-butylperoxid, tert-Butylhydroperoxid, Cumolhydroperoxid, tert-Butylperoctanoat, tert-Butylper-2-ethylhexanoat, tert-Butylperneodecanoat, tert-Amylperpivalat, tert-Butylperpivalat, tert-Butylperbenzoat, Lithium-, Natrium-, Kalium- und Ammoniumperoxodisulfat, Azoisobutyronitril, 2,2-Azobisiso-2,4-dimethylvaleronitril, 2,2-Azobisisobutyro-nitril, 2,2`-Azo-bis(2-amidinopropan)dihydrochlorid, 2-(Carbamoylazo)isobutyronitril und 4,4'-Azobis(cyanovaleriansäure). Gleichfalls geeignet sind Redoxinitiatoren (H. Rauch-Puntigam, Th. Völker, Acryl- und Methacrylverbindungen, Springer, Heidelberg, 1967 oder Kirk-Othmer, Encyclopedia of Chemical Technology, Vol. 1, Seiten 286 ff, John Wiley & Sons, 1New York, 1978). Es kann günstig sein, Initiatoren und Initiatorsysteme mit unterschiedlichen Zerfallseigenschaften bezüglich Zeit und Temperatur zu kombinieren. Bevorzugt werden die Initiatoren in Mengen von 0,01 bis 2 Gew%, besonders bevorzugt von 0,15 bis 1,5 Gew% bezogen auf das Gesamtgewicht der Monomere eingesetzt.

Darüber hinaus kann das Gemisch 0 bis 35 Gew% weitere vinylisch ungesättigte Monomere, 0 bis 10 Gew% eines weiteren Vernetzers und 0 bis 20 Gew% übliche Zusatzstoffe enthalten. Das Gemisch wird erfindungsgemäß in Substanz zu einer Platte polymerisiert. Dies kann diskontinuierlich im Kammerverfahren oder kontinuierlich durch Verfüllung bzw. Extrusion in geeignete formgebende Werkzeuge erfolgen.

Beispiele für die weiteren vinylisch ungesättigten Monomere sind: Acryl- oder Methacrylsäure sowie deren Ester mit niedrigen Alkoholen mit 1 - 4 C-Atomen, Styrol, Maleinsäure oder deren Anhydrid, Itakonsäure oder deren Anhydrid, Vinylpyrrolidon, Vinylchlorid und/oder Vinylidenchlorid. Der Anteil der Comonomere, die sich nicht oder nur sehr schwer zu Anhydrid oder Imid cyclisieren lassen, soll 30 Gew% vorzugsweise 20 Gew% und besonders bevorzugt 10 Gew%, bezogen auf das Gewicht der Monomeren, nicht übersteigen.

Die möglichen weiteren Vernetzer neben den (Meth)acrylsäurediestern der langkettigen Diole können in zwei Gruppen unterteilt werden: kovalente Vernetzer (D1), also einpolymerisierbare mehrfach ungesättigte Verbindungen. Als derartige Monomere können z. B. Allylacrylat, Allylmethacrylat, Allylacrylamid, Allylmethacrylamid, Methylen-bis-(meth)acrylamid Diethylenbis(allylcarbonat), Ethylenglykoldiacrylat oder - dimethacrylat, Diethylenglykoldiacrylat oder - dimethacrylat, Triethylenglykoldiacrylat oder - dimethacrylat, Tetraethylenglykoldiacrylat oder -dimethacrylat, Tripropylenglykoldiacrylat oder -dimethacrylat, 1,3-Butandioldiacrylat oder -dimethacrylat, 1,4-Butandioldiacrylat oder -dimethacrylat, Neopentyldioldiacrylat oder -dimethacrylat, Hexandiol-1,6-diacrylat oder -dimethacrylat, Trimethylolpropandiacrylat oder -dimethacrylat, Trimethylolpropantriacrylat oder - trimethacrylat, Pentaerythrittriacrylat oder - trimethacrylat, Pentaerythrittetraacrylat oder - tetramethacrylat, die Pentaerythritderivate jeweils ggf. auch als technisches Gemisch aus tri- und tetrafunktionellen Verbindungen, sowie Triallylcyanurat oder Triallylisocyanurat verwendet werden. Als weitere Gruppe kommen ionische Vernetzer (D2) in Betracht. Dies sind mehrwertige Metallkationen, die ionische Brücken zwischen den Säuregruppen der Copolymere ausbilden. Beipiele sind unter anderem die Acrylate oder Methacrylate der Erdalkalimetalle oder des Zinks. Bevorzugt sind Zn- und Mg-(meth)acrylat. Die (Meth)acrylatsalze können auch durch Auflösen z.B. von ZnO oder MgO im Monomeransatz hergestellt werden.

Bei den üblichen Zusatzstoffen kann es sich beispielsweise um Antistatika, Antioxidantien, Entformungshilfsmittel, Schmiermittel, Farbstoffe, Flammschutzmittel, Fließverbesserungsmittel, Füllstoffe, Lichtstabilisatoren und organische Phosphorverbindungen, wie Phosphite oder Phosphonate, Pigmente, Trennmittel, Verwitterungsschutzmittel und/oder Weichmacher handeln.

Bevorzugt handelt es sich bei dem im erfindungsgemäßen Verfahren eingesetzten Gemisch zur Herstellung von schäumbaren vernetzten Polymerisaten durch Polymerisation in Substanz zu einer Platte um ein Gemisch aus 30 bis 70 Gew% Methacrylsäure, 30 bis 60 Gew% Methacrylnitril, 0,01 bis 15 Gew% eines Methacrylsäurediesters eines Diols, welches ein Molekulargewicht von mindestens 250 g/mol aufweist und bei dem es sich insbesondere um ein Polyetherdimethacrylat handelt, 0,01 bis 15 Gew% Treibmittel, 0,01 bis 10 Gew% eines weiteren Vernetzers, 0,01 bis 2 Gew% Polymerisationsinitiatoren und 0 bis 30 Gew% weiteren vinylisch ungesättigten Monomeren, sowie 0 bis 20 Gew% übliche Zusatzstoffe.

Nach der Polymerisation des Gemischs in Substanz zu einer Platte wird das Polymerisat gegebenenfalls getempert und anschließend bei Temperaturen von 150 bis 250 °C geschäumt.

Gleichfalls Bestandteil der vorliegenden Erfindung ist der Poly(meth)acrylimid-Schaumstoff, der durch Schäumen des beschriebenen Polymerisats erhalten wird. Dieser PMI-Schaumstoff weist eine Reißdehnung gemäß ISO 527-2 größer 7,0%, insbesonder größer 9,0% und besonders bevorzugt größer 10,0% auf.

Die erfindungsgemäßen Schaumstoffe können anschließend zu Schichtwerkstoffen verarbeitet werden. Diese Schichtwerkstoffe enthalten in einer, bevorzugt mittleren Schicht, umgeben von nicht geschäumten Polymeren oder anderen Materialien wie Textilien oder Holz, eine Schicht des PMI-Schaumstoffes.

Die Schaumstoffe oder die daraus hergestellten Schichtwerkstoffe können beispielsweise in Rohren, Lautsprechern, Antennen, Röntgentischen, Maschinenteilen, Kraftfahrzeugen, Schienenfahrzeugen, Wasserfahrzeugen, Luftfahrzeugen, Raumfahrzeugen verbaut werden.

Die im Folgenden gegebenen Beispiele werden zur besseren Veranschaulichung der vorliegenden Erfindung gegeben, sind jedoch nicht dazu geeignet, die Erfindung auf die hierin offenbarten Merkmale zu beschränken.

### Beispiele

Die Reißdehnung und die Reißfestigkeit wurden mittels Zugversuchen gemäß ISO 527-2 bestimmt.

Das Raumgewicht wird gemäß ISO 845 gemessen.

Die Wärmeformbeständigkeit wurde gemäß DIN 53424 bestimmt.

Das Kriechverhalten (Kriechen) wurde im Einklang mit DIN 53425, ASTM D621 und D2990 bei 180°C, einer Messzeit von zwei Stunden und einem Druck von 0,7 MPa gemessen.

### Beispiel 1:

Zu einem Gemisch aus 2487 g Methacrylsäure, 2538 g Methacrylnitril und 102 g tert-Butylmethacrylat wurden als Treibmittel 355 g tert-Butanol zugesetzt. Des Weiteren wurden der Mischung 2 g tert-Butylperpivalat, 1,8 g tert-Butylper-2-ethyl-hexanoat, 5,1 g tert-Butylperbenzoat, 5,2 g Cumylperneodecanoat, 11,2 g Magnesiumoxid und 15,2 g Trennmittel (Moldwiz INT 20E) hinzugefügt. Als Vernetzer wurden 77,2 g Methacrylsäurediester von Polyethylenglycol 400 zugesetzt.

Diese Mischung wurde 89 h bei 39°C und in einer aus zwei Glasplatten der Größe 50x50 cm und einer 28 mm dicken Randabdichtung gebildeten Kammer polymerisiert. Anschließend wurde das Polymerisat zur Endpolymerisation 32 h einem von 40°C bis 115°C reichenden Temperprogramm unterworfen.

Die darauffolgende Schäumung im Heißluftverfahren erfolgte 2h bei 217°C. Der so erhaltene Schaumstoff weist ein Raumgewicht von 105 kg/m³ auf. Die Reißdehnung beträgt 7,2%, die Reißfestigkeit 6,0 MPa. Der Kriechversuch bei 0,7 MPa (2h/180°C) wird mit einer Stauchung von 0,07% bestanden. Eine weitere Probe wurde für 2h bei 205°C geschäumt. Der so erhaltene Schaumstoff weist ein Raumgewicht von 145 kg/m³ auf. Die Reißdehnung beträgt 8,3%, die Reißfestigkeit 9,0 MPa.

### Beispiel 2:

Zu einem Gemisch aus 2421 g Methacrylsäure, 2471 g Methacrylnitril wurden als Treibmittel 593 g tert-Butanol zugesetzt. Des Weiteren wurden der Mischung 2 g tert-Butylperpivalat, 1,8 g tert-Butylper-2-ethyl-hexanoat, 4,9 g tert-Butylperbenzoat, 5,1 g Cumylperneodecanoat, 10,9 g Magnesiumoxid und 14,8 g Trennmittel (Moldwiz INT 20E) hinzugefügt. Als Vernetzer wurden 75,1 g Methacrylsäurediester von Polyethylenglycol 400 zugesetzt.

Diese Mischung wurde 118 h bei 39°C und in einer aus zwei Glasplatten der Größe 50x50 cm und einer 28 mm dicken Randabdichtung gebildeten Kammer polymerisiert. Anschließend wurde das Polymerisat zur Endpolymerisation 32 h einem von 40°C bis 115°C reichenden Temperprogramm unterworfen.

Die darauffolgende Schäumung im Heißluftverfahren erfolgte 2h bei 188°C. Der so erhaltene Schaumstoff wies ein Raumgewicht von 150 kg/m³ auf. Die Reißdehnung beträgt 9,7%, die Reißfestigkeit 9,1 MPa. Der Kriechversuch bei 0,7MPa (2h/180°C) wird mit einer Stauchung von 0,36% sicher bestanden.

### Beispiel 3:

Zu einem Gemisch aus 2379 g Methacrylsäure, 2428 g Methacrylnitril und 97 g tert-Butylmethacrylat wurden als Treibmittel 340 g tert-Butanol zugesetzt. Des Weiteren wurden der Mischung 1,9 g tert-Butylperpivalat, 1,8 g tert-Butylper-2-ethyl-hexanoat, 4,8 g tert-Butylperbenzoat, 5,0 g Cumylperneodecanoat, 10,7 g Magnesiumoxid und 14,5 g Trennmittel (Moldwiz INT 20E) hinzugefügt. Als Vernetzer wurden 73,8 g Methacrylsäurediester von Polyethylenglycol 400 zugesetzt.

Diese Mischung wurde 90 h bei 39°C und in einer aus zwei Glasplatten der Größe 50x50 cm und einer 28 mm dicken Randabdichtung gebildeten Kammer polymerisiert. Anschließend wurde das Polymerisat zur Endpolymerisation 32 h einem von 40°C bis 115°C reichenden Temperprogramm unterworfen.

Die darauffolgende Schäumung im Heißluftverfahren erfolgte 2h bei 212°C. Der so erhaltene Schaumstoff wies ein Raumgewicht von 99 kg/m³ auf. Die Reißdehnung beträgt 13,0 %, die Reißfestigkeit 6,0 MPa. Eine weitere Probe wurde für 2h bei 210°C geschäumt. Der so erhaltene Schaumstoff wies ein Raumgewicht von 114 kg/m³ auf. Der Kriechversuch bei 0,7MPa (2h/180°C) wurde mit einer Stauchung von nur 0,45% sicher bestanden.

### Vergleichsbeispiel 1:

Zu einem Gemisch aus 2520 g Methacrylsäure, 2572 g Methacrylnitril und 103 g tert -Butylmethacrylat wurden als Treibmittel 360 g tert-Butanol zugesetzt. Des Weiteren wurden der Mischung 2,1 g tert-Butylperpivalat, 1,9 g tert-Butylper-2-ethyl-hexanoat, 5,1 g tert-Butylperbenzoat, 5,3 g Cumylperneodecanoat, 10,3 g Magnesiumoxid und 15,4 g Trennmittel (Moldwiz INT 20E) hinzugefügt. Als Vernetzer wurden 5,1 g Allylmethacrylat zugesetzt.

Diese Mischung wurde 88 h bei 39°C und in einer aus zwei Glasplatten der Größe 50x50 cm und einer 28 mm dicken Randabdichtung gebildeten Kammer polymerisiert. Anschließend wurde das Polymerisat zur Endpolymerisation 32 h einem von 40°C bis 120°C reichenden Temperprogramm unterworfen.

Die darauffolgende Schäumung im Heißluftverfahren erfolgte 2h bei 200°C. Der so erhaltene Schaumstoff weist ein Raumgewicht von 114 kg/m³ auf. Die Reißdehnung beträgt 5,5%, die Reißfestigkeit 3,7 MPa. Eine weitere Probe wurde für 2 h bei 190 °C geschäumt. Der so erhaltene Schaumstoff weist ein Raumgewicht von 148 kg/m³ auf. Die Reißdehnung beträgt 5,4%, die Reißfestigkeit 7,6 MPa.

## Patentansprüche

1. Verfahren zur Herstellung von schäumbaren vernetzten Polymerisaten, **dadurch gekennzeichnet, dass** das Polymerisat (Meth)acrylsäure, (Meth)acrylnitril und einen (Meth)acrylsäurediester eines Diols, welches ein Molekulargewicht von mindestens 250 g/mol aufweist, enthält

2. Verfahren zur Herstellung von schäumbaren vernetzten Polymerisaten gemäß Anspruch 1, **dadurch gekennzeichnet, dass** ein Gemisch aus
(A)
30-70 Gew% (Meth)acrylsäure,
30-60 Gew% (Meth)acrylnitril,
0-35 Gew% weiteren vinylisch ungesättigten Monomeren,
(B) 0,01-15 Gew% eines (Meth)acrylsäurediesters eines Diols, welches ein Molekulargewicht von mindestens 250 g/mol aufweist,
(C) 0,01-15 Gew% Treibmittel,
(D) 0 -10 Gew% eines weiteren Vernetzers,
(E) 0,01 bis 2,0 Gew% Polymerisationsinitiatoren und
(F) 0 bis 20 Gew% üblichen Zusatzstoffen
in Substanz zu einer Platte polymerisiert wird.

3. Verfahren zur Herstellung von schäumbaren vernetzten Polymerisaten gemäß Anspruch 2, **dadurch gekennzeichnet, dass** es sich bei dem Diol um ein Polyetherdiol, ein Polyesterdiol, ein OH-funktionelles Oligo(meth)acryltelechel oder ein Polyolefindiol, bevorzugt um ein Polyetherdiol handelt.

4. Verfahren zur Herstellung von schäumbaren vernetzten Polymerisaten gemäß Anspruch 2 oder 3, **dadurch gekennzeichnet, dass** ein Gemisch aus
(A)
30-70 Gew% Methacrylsäure,
30-60 Gew% Methacrylnitril,
0-30 Gew% weiteren vinylisch ungesättigten Monomeren,
(B) 0,01-15 Gew% eines Methacrylsäurediesters eines Diols, welches ein Molekulargewicht zwischen 250 und 1500 g/mol aufweist,
(C) 0,01-15 Gew% Treibmittel,
(D) 0,01-10 Gew% eines weiteren Vernetzers,
(E) 0,01 bis 2,0 Gew% Polymerisationsinitiatoren und
(F) 0 bis 20 Gew% üblichen Zusatzstoffen.
in Substanz zu einer Platte polymerisiert wird.

5. Verfahren zur Herstellung von geschäumten vernetzten Polymerisaten, **dadurch gekennzeichnet, dass** eine gemäß Anspruch 4 hergestellte Platte gegebenenfalls getempert und anschließend bei Temperaturen von 150 bis 250°C geschäumt wird.

6. Poly(meth)acrylimid-Schaumstoff, **dadurch gekennzeichnet dass** er durch Schäumen der nach dem Verfahren gemäß mindestens einem der Ansprüche 1 bis 4 hergestellten Polymerisaten erhalten wird.

7. Poly(meth)acrylimid-Schaumstoff gemäß Anspruch 6, **dadurch gekennzeichnet dass** der Schaumstoff eine mittels Zugversuchen gemäß ISO 527-2 bestimmte Reißdehnung größer 7,0%, ganz besonders größer 9,0% aufweist.

8. Schichtwerkstoff enthaltend eine Schicht eines Poly(meth)acrylimid-Schaumstoffes gemäß Anspruch 6 oder 7.

9. Rohr, Lautsprecher, Antenne, Röntgentisch, Maschinenteil, Kraftfahrzeug, Schienenfahrzeug, Wasserfahrzeug, Luftfahrzeug, Raumfahrzeug **dadurch gekennzeichnet, dass** es teilweise aus einem Poly(meth)acrylimid-Schaumstoffes gemäß mindestens einem der Ansprüche 6 bis 8 besteht.

## Claims

1. Process for producing foamable crosslinked polymers, **characterized in that** the polymer comprises (meth)acrylic acid, (meth)acrylonitrile and a (meth) acrylic diester of a diol which has a molar mass of at least 250 g/mol.

2. Process for producing foamable crosslinked polymers according to Claim 1, **characterized in that** a mixture made of
(A) from 30 to 70% by weight of (meth)acrylic acid, from 30 to 60% by weight of (meth)acrylonitrile, from 0 to 35% by weight of other vinylically unsaturated monomers,
(B) from 0.01 to 15% by weight of a (meth) acrylic diester of a diol which has a molar mass of at least 250 g/mol,
(C) from 0.01 to 15% by weight of blowing agent,
(D) from 0 to 10% by weight of another crosslinking agent,
(E) from 0.01 to 2.0% by weight of polymerization initiators and
(F) from 0 to 20% by weight of conventional additives
is polymerized in bulk to give a sheet.

3. Process for producing foamable crosslinked polymers according to Claim 2, **characterized in that** the diol is a polyetherdiol, a polyesterdiol, an OH-functional oligo(meth)acrylic telechelic compound or a polyolefindiol, preferably a polyetherdiol.

4. Process for producing foamable crosslinked polymers according to Claim 2 or 3, **characterized in that** a mixture made of
(A) from 30 to 70% by weight of (meth)acrylic acid, from 30 to 60% by weight of (meth)acrylonitrile, from 0 to 30% by weight of other vinylically unsaturated monomers,
(B) from 0.01 to 15% by weight of a (meth) acrylic diester of a diol which has a molar mass of from 250 to 1500 g/mol,
(C) from 0.01 to 15% by weight of blowing agent,
(D) from 0.01 to 10% by weight of another crosslinking agent,
(E) from 0.01 to 2.0% by weight of polymerization initiators and
(F) from 0 to 20% by weight of conventional additives
is polymerized in bulk to give a sheet.

5. Process for producing foamed crosslinked polymers, **characterized in that** a sheet produced according to Claim 4 is optionally heat-conditioned and then foamed at temperatures of from 150 to 250°C.

6. Poly(meth)acrylimide foam, **characterized in that** it is obtained by foaming of the polymers produced by the process according to at least one of Claims 1 to 4.

7. Poly(meth)acrylimide foam according to Claim 6, **characterized in that** the tensile strain at break of the foam, determined by means of tensile tests according to ISO 527-2, is greater than 7.0%, very particularly greater than 9.0%.

8. Laminate comprising a layer of a poly(meth)acrylimide foam according to Claim 6 or 7.

9. Tube, loudspeaker, antenna, X-ray table, machine part, motor vehicle, rail vehicle, watercraft, aircraft, spacecraft, **characterized in that** it is composed to some extent of a poly(meth)acrylimide foam according to at least one of Claims 6 to 8.

## Revendications

1. Procédé pour la production de polymérisats réticulés aptes à être transformés en mousse, **caractérisé en ce que** le polymérisat contient de l'acide (méth)acrylique, du (méth)acrylonitrile et un diester d'acide (méth)acrylique avec un diol, qui présente une masse moléculaire d'au moins 250 g/mole.

2. Procédé pour la production de polymérisats réticulés aptes à être transformés en mousse selon la revendication 1, **caractérisé en ce qu'**on polymérise tel quel un mélange de
(A)
30-70 % en poids d'acide (méth)acrylique,
30-60 % en poids de (méth)acrylonitrile,
0-35 % en poids d'autres monomères à insaturation vinylique,
(B) 0,01-15 % en poids d'un diester d'acide (méth)acrylique avec un diol, qui présente une masse moléculaire d'au moins 250 g/mole,
(C) 0,01-15 % en poids d'agent porogène,
(D) 0-10 % en poids d'un autre agent de réticulation,
(E) 0,01 à 2,0 % en poids d'amorceurs de polymérisation et
(F) 0 à 20 % en poids d'additifs usuels
pour obtenir une plaque.

3. Procédé pour la production de polymérisats réticulés aptes à être transformés en mousse selon la revendication 2, **caractérisé en ce que** pour ce qui concerne le diol il s'agit d'un polyétherdiol, d'un polyesterdiol, d'un composé oligo(méth)acrylique téléchélique à fonction OH ou d'un diol polyoléfinique, de préférence d'un polyétherdiol.

4. Procédé pour la production de polymérisats réticulés aptes à être transformés en mousse selon la revendication 2 ou 3, **caractérisé en ce qu'**on polymérise tel quel un mélange de
(A)
30-70 % en poids d'acide méthacrylique,
30-60 % en poids de méthacrylonitrile,
0-30 % en poids d'autres monomères à insaturation vinylique,
(B) 0,01-15 % en poids d'un diester d'acide méthacrylique avec un diol, qui présente une masse moléculaire comprise entre 250 et 1 500 g/mole,
(C) 0,01-15 % en poids d'agent porogène,
(D) 0,01-10 % en poids d'un autre agent de réticulation,
(E) 0,01 à 2,0 % en poids d'amorceurs de polymérisation et
(F) 0 à 20 % en poids d'additifs usuels
pour obtenir une plaque.

5. Procédé pour la production de polymérisats réticulés transformés en mousse, **caractérisé en ce qu'**éventuellement on soumet à un traitement thermique une plaque produite selon la revendication 4 et ensuite on la transforme en mousse à des températures de 150 à 250 °C.

6. Mousse de poly(méth)acrylimide, **caractérisée en ce qu'**elle est obtenue par moussage des polymérisats produits conformément au procédé selon au moins l'une quelconque des revendications 1 à 4.

7. Mousse de poly(méth)acrylimide selon la revendication 6, **caractérisée en ce que** la mousse présente un allongement à la rupture, déterminé au moyen d'essais de traction selon ISO 527-2, supérieur à 7,0 %, tout particulièrement supérieur à 9,0 %.

8. Matériau stratifié, contenant une couche d'une mousse de poly(méth)acrylimide selon la revendication 6 ou 7.

9. Tube, haut-parleur, antenne, table radiologique, pièce de machine, véhicule automobile, véhicule sur rails, véhicule aquatique, aéronef, véhicule spatial caractérisé(e) en ce qu'il(elle) est en partie constitué(e) d'une mousse de poly(méth)acrylimide selon au moins l'une quelconque des revendications 6 à 8.
